# EUROPÄISCHE PATENTANMELDUNG

(11) **EP 0 579 899 A1**
(43) Veröffentlichungstag der Anmeldung: **26.01.1994**
(21) Anmeldenummer: 93102811.2
(22) Anmeldetag: 24.02.1993
(51) Int. Cl.: G02B 6/44

(54) **Anschlusseinheit für Glasfaserkabel**

(30) Priorität: 30.03.1992 DE 9204490 U
(71) Anmelder: KRONE Aktiengesellschaft, D-14167 Berlin (DE)
(72) Erfinder: Permin, Hans-Joachim, Dipl.-Ing., W-1000 Berlin 33 (DE); Teichler, Heide, W-1000 Berlin 61 (DE); Richter, Gerd, Dipl.-Ing., W-1000 Berlin 37 (DE)

(57) **Zusammenfassung**

Die Erfindung bezieht sich auf eine Anschlußeinheit für Glasfaserkabel, insbesondere für ein 19"-Magazin, aus einem Trägerteil (1) mit einem an diesem befestigten Anschlußfeld für Glasfaserstecker und aus einer Wickelkassette (3) zur Aufnahme der einzelnen Glasfasern und Spleißverbindungen.

Um eine Anschlußeinheit dahingehend zu verbessern, daß eine wesentliche Vereinfachung der Handhabung der Anschlußeinheit bei einem Spleißvorgang gegeben ist, weist das Trägerteil (1) Halteelemente (6) zur lösbaren Aufnahme der Wickelkassette (3) auf. Die einzelnen Glasfasern (22) des ankommenden Glasfaserkabels (21) sind über die an der Wickelkassette (3) festgelegten Spleißverbindungen (28) mit den einzelnen, zu den Glasfasersteckern (12) geführten, Glasfasern (22) verbunden; und das Glasfaserkabel (21) und die einzelnen Glasfasern (22) sind gemeinsam auf die am Trägerteil (1) lösbar angebrachte Wickelkassette (3) aufgewickelt, .

## Beschreibung

Die Neuerung bezieht sich auf eine Anschlußeinheit für Glasfaserkabel, insbesondere für ein 19"-Magazin, aus einem Trägerteil mit einem an diesem befestigten Anschlußfeld für Glasfaserstecker und aus einer Wickelkassette zur Aufnahme der einzelnen Glasfasern und Spleißverbindungen.

Eine Anschlußeinheit für Glasfaserkabel der gattungsgemäßen Art ist aus dem DE-GM 90 12 527 vorbekannt. Bei der hier vorbeschriebenen Rangiereinheit für Glasfasern ist das Anschlußfeld für Glasfaserstecker in Form einer Rangierleiste direkt auf dem Abdeckblech der Spleiß-/Wickelkassette positioniert. Nachteilig hierbei ist, daS zum Verbringen der Spleiß-/Wickelkassette in ein Spleißgerät regelmäßig die gesamte Rangiereinheit, d.h. Spleiß-/Wickelkassette mit Trägerteil und Anschlußfeld bewegt werden muß. Hierzu müssen entweder die frontseitigen Glasfaserstecker gezogen oder die frontseitig angeschlossenen Glasfaserkabel zusammen mit der Anschlußeinheit zur Spleißstation verbracht werden.

Der Neuerung liegt von daher die Aufgabe zugrunde eine Anschlußeinheit für Glasfaserkabel der gattungsgemäßen Art dahingehend zu verbessern, daß eine wesentliche Vereinfachung der Handhabung der Anschlußeinheit bei einem Spleißvorgang gegeben ist.

Zur Lösung dieser Aufgabe sieht die Neuerung vor, daß das Trägerteil Halteelemente zur lösbaren Aufnahme der Wickelkassette aufweist und daß die einzelnen Glasfasern des ankommenden Glasfaserkabels über die an der Wickelkassette festgelegten Spleißverbindungen mit den einzelnen, zu den Glasfasersteckern geführten Glasfasern verbunden und das Glasfaserkabel und die einzelnen Glasfasern gemeinsam auf die am Trägerteil lösbar angebrachte Wickelkassette aufgewickelt sind. Hierdurch wird erreicht, daß für einen notwendigen Spleißvorgang nur eine geringe Auszugsbewegung der Anschlußeinheit für Glasfaserkabel aus dem Magazin, insbesondere 19"-Magazin erforderlich ist, woraufhin die Wickelkassette dem Trägerteil entnommen werden und durch gemeinsames Abwickeln sowohl des zugeführten Glasfaserkabels als auch der einzelnen Glasfasern zum Spleißvorgang zu einer Spleißstelle verbracht werden kann. Die Länge des aufgewickelten, zugeführten Glasfaserkabels und der aufgewickelten, einzelnen Glasfasern beträgt etwa einen Meter.

In besonders bevorzugter Weise sind die Seitenflansche des Wickelkörpers aus abwechselnd gegenüberliegenden Flanschstegen gebildet, die wiederum mit abwechselnd gegenüberliegenden, die Wickelnut nach oben abschließenden Verschlußrippen versehen sind. Hierdurch wird ein Herausfallen der bereits aufgewickelten Länge der Glafasern und des Glasfaserkabels aus der Wickelnut verhindert.

Aus der DE 37 06 518 A1 sind zwar bereits die Wickelnut nach oben abschließende Abdeckelemente, z.B. scharnierartig an die Seitenflansche des Wickelkörpers angeformte Klappen vorbekannt. Hierbei sind die Seitenflansche des Wickelkörpers jedoch jeweils ohne jede Unterbrechung ausgebildet. Außerdem ist nach dem Aufwickelvorgang ein gesonderter Vorgang des Schließens der Wickelnut mit den Klappen notwendig.

Die Neuerung ist nachfolgend anhand eines in den Zeichnungen näher dargestellten Ausführungsbeispieles einer Anschlußeinheit für Glasfaserkabel näher erläutert. Es zeigen:
- Fig. 1: Eine perspektivische Ansicht der aus Trägerteil mit Anschlußfeld für Glasfaserstecker und Wickelkassette bestehenden Anschlußeinheit bei aus dem Trägerteil entnommener Wickelkassette,
- Fig. 2: die Rückansicht des Trägerteils mit eingesetzter Wickelkassette jedoch ohne Glasfaserkabel und
- Fig. 3: ein vergrößertes Detail der Wickelkassette mit eingelegtem Glasfaserkabel.

Die Anschlußeinheit für Glasfaserkabel besteht aus einem plattenförmigen Trägerteil 1 mit einer etwa mittig und quer zu diesem befestigten Frontplatte 2 und einer Wickelkassette 3.

Der plattenförmige Trägerteil 1 ist in U-förmigen Führungsschienen 4 des Gestells eines Magazines, insbesondere eines 19"-Magazins, einschiebbar und an diesem mittels Bohrungen 5 durchgreifender, nichtdargestellter Befestigungsmittel befestigbar.

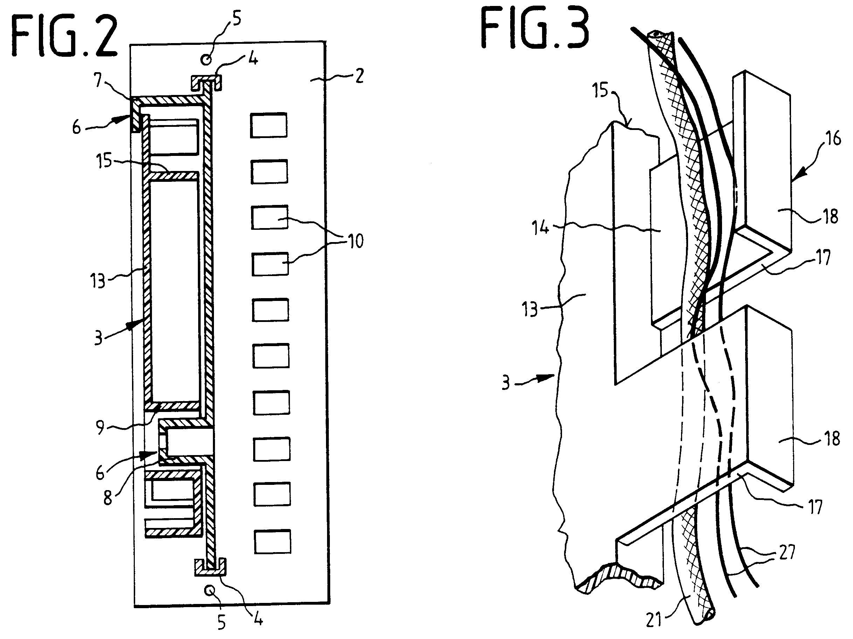

Der in die Führungsschienen 4 einschiebbare, plattenförmige Trägerteil 1 umfaßt auf seiner einen Seite Kalteelemente 6 zur lösbaren Aufnahme der Wickelkassette 3. Diese Halteelemente 6 sind aus einer am oberen Ende des Trägerteils 1 angeordneten, nach unten offenen Haltelasche 7 und einer im unteren Bereich des Trägerteils 1 angeordneten Lagesicherungssicke 8 gebildet, die in eine Öffnung 9 der Wickelkassette 3 eingreift. Auf diese Weise kann die Wickelkassette 3, wie es insbesondere in Figur 2 dargestellt ist, durch schräges Einführen unter die Haltelasche 7 und anschließendes Einklappen auf die Lagesicherungssicke 8 leicht am Trägerteil 1 festgelegt werden. Zusätzlich kann eine formschlüssige Verrastung durch eine nicht dargestellte knebelartige Haltenase erfolgen.

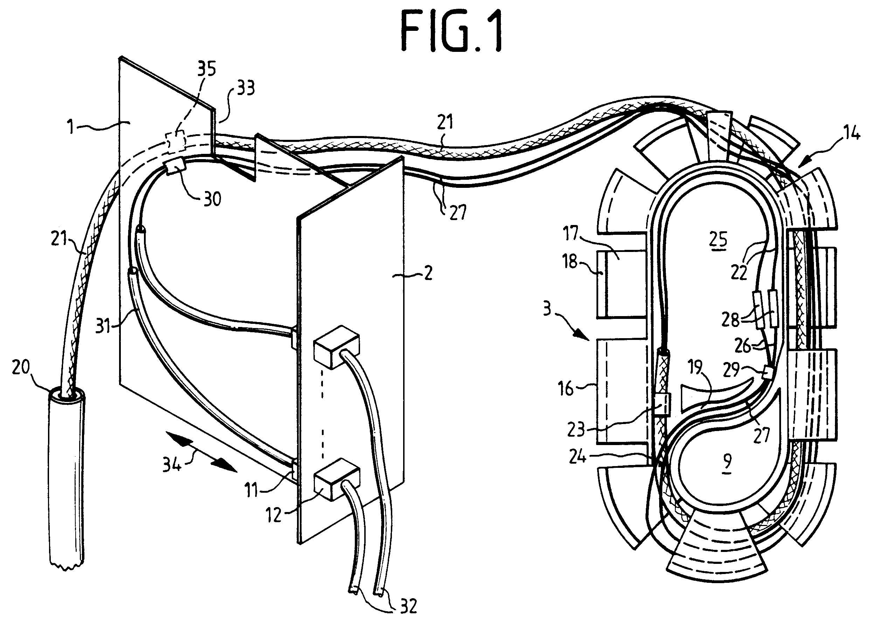

Auf der den Halteelementen 6 gegenüberliegenden Seite des Trägerteiles 1 befinden sich innerhalb der Frontplatte 2 übereinanderliegende Durchbrüche 10 für Glasfaserkupplungen 11 und Glasfaserstecker 12, die in Figur 1 dargestellt sind.

Die in der Figur 1, rechts, in Draufsicht und Figur 3 in einem vergrößerten Detail dargestellte Wickelkassette 3 umfaßt eine Kassettenrückwand 13, die nur von der Öffnung 9 durchbrochen ist, ein auf dessen Vorderseite senkrecht hervorstehendes, oval ausgebildetes und umlaufendes stegartiges Bett 15 als Basis einer Wickelnut 14 und zwei seitlich an das Bett 15 anschließende Seitenflansche 16, die aus abwechselnd gegenüberliegenden L-förmige Flanschstegen 17 mit abwechselnd gegenüberliegenden, die Wickelnut 14 nach oben abschließenden Verschlußrippen 18 versehen sind. Diese Ausbildung der sich abwechselnd gegenüberstehenden L-förmigen Flanschstege 17 mit Verschlußrippen 18 ist insbesondere der Detaildarstellung in Figur 3 zu entnehmen. Auf der insbesondere in Fig. 1, rechts, dargestellten offenen Vorderseite der Wickelkassette 3 ist eine S-förmige Umlenknut 19 zu erkennen, welche die Öffnung 9 zur Aufnahme der Lagesicherungssicke 8 teilweise umschließt.

Wie es in Fig. 1 dargestellt ist, wird über eine am nicht näher dargestellten Gestell befestigte Isolierröhre 20 ein Glasfaserkabel 21 mit beispielsweise zehn Glasfasern 22 der Anschlußeinheit zugeführt, wobei das von einer Isolierhülle ummantelte Glasfaserkabel 21 an einer Befestigungsstelle 22 des Trägerteils 1 fixiert und mit einer Überlänge der Wickelkassette 3 zugeführt ist, wo die Isolierhülle des Glasfaserkabels 21 an einer Befestigungsstelle 23 fixiert ist. Hierzu wird das Glasfaserkabel 21 aus der Wickelnut 14 durch einen Überführungskanal 24 in den offenen Aufnahmeraum 25 der Vorderseite der Wickelkassette 3 geführt. Dort werden die einzelnen Glasfasern 22 freigelegt und mit den Glasfasern 26 von sogenannten Pigtails 27 über Spleiße 28 verbunden. Die Pigtails 27 sind an der Befestigungsstelle 29 festgelegt. Von dort werden die Glasfasern 26 über die S-förmige Umlenknut 19 und den Überführungskanal 24 aufgewickelt. Die Überlängen der Glasfasern 26 der Pigtails 27 sind zum Trägerteil 1 geführt, wo diese an der Befestigungsstelle 31 festgelegt sind und über Isolierhüllen 31 den Glasfaserkupplungen 11 auf der Innenseite der Frontplatte 2 zugeführt sind. Auf der Außenseite der Frontplatte 2 befinden sich die Glasfaserstecker 12 der Patchkabel 32.

Wie es insbesondere die Figur 1, rechts, und die Fig.3 zeigen, werden das Glasfaserkabel 21 und die einzelnen Glasfasern 26 der Pigtails 27 gemeinsam und in gleichem Wickelsinne auf die Wickelkassette 3 aufgewickelt, wobei das Glasfaserkabel 21 und die Pigtails 27 gemeinsam abwechselnd von den Flanschstegen 17 links bzw. rechts gehalten und mittels der Verschlußrippen 18 an einem Herausrutschen aus der Wickelnut 15 gehindert werden.

Die Befestigungsstelle 35 für das Glasfaserkabel 21 befindet sich auf der Seite der Trägerplatte 1, auf welcher die Halteelemente 6 für die Wickelkassette 3 angeordnet sind. Die Befestigungsstelle 30 für die Pigtails 27 befindet sich auf der gegenüberliegenden Seite, wozu ein Ausschnitt 33 zur Durchführung der Pigtails 27 am oberen Rand des Trägerteiles 1 vorgesehen ist. Die Überlänge des Glasfaserkabels 21 und der einzelnen Pigtails 27 beträgt ca. einen Meter. Die Verschiebebewegung des Trägerteiles 1 innerhalb der Führungsschienen 4 des Gestells ist durch den Pfeil 34 in Fig.1 verdeutlicht.

Die beschriebene Anschlußeinheit für Glasfaserkabel mit Trägerteil 1, Frontplatte 2 und Wickelkassette 3 ermöglicht insgesamt eine Umlenkung des Glasfaserkabels 21 und der einzelnen Glasfasern 26 bzw. der Pigtails 27, ein Aufwickeln der Überlängen beider Faserarten bis zu den Befestigungsstellen 30 bzw. 35 und verhindert ein Herausfallen der bereits auf die Wickelkassette 3 aufgewickelten Faserlängen durch die spezielle Ausbildung der Flanschstege 17 und der Verschlußrippen 18. Das Trägerteil 1 und die Frontplatte 2 bestehen vorzugsweise aus Blech. Das Trägerteil 1 ist in den Führungsschienen 4 des Gestells gemäß Pfeil 34 um einige Zentimeter bewegbar, um die Wickelkassette 3 entnehmen zu können.

### BEZUGSZEICHENLISTE

- 01: Trägerteil
- 02: Frontplatte
- 03: Wickelkassette
- 04: Führungsschiene
- 05: Bohrung
- 06: Halteelement
- 07: Haltelasche
- 08: Lagesicherungssicke
- 09: Öffnung
- 10: Durchbruch
- 11: Glasfaserkupplung
- 12: Glasfaserstecker
- 13: Kassettenrückwand
- 14: Wickelnut
- 15: Bett
- 16: Seitenflansch
- 17: Flanschsteg
- 18: Verschlußrippe
- 19: Umlenknut
- 20: Isolierröhe
- 21: Glasfaserkabel
- 22: Glasfaser
- 23: Befestigungsstelle
- 24: Überführungskanal
- 25: Aufnahmeraum
- 26: Glasfaser
- 27: Pigtail
- 28: Spleiß
- 29: Befestigungsstelle
- 30: Befestigungsstelle
- 31: Isolierhülle
- 32: Patchkabel
- 33: Ausschnitt
- 34: Pfeil
- 35: Befestigungsstelle

## Patentansprüche

1. Anschlußeinheit für Glasfaserkabel, insbesondere für ein 19"-Magazin, aus einem Trägerteil (1) mit einem an diesem befestigten Anschlußfeld für Glasfaserstecker und aus einer Wickelkassette (3) zur Aufnahme der einzelnen Glasfasern und Spleißverbindungen,
**dadurch gekennzeichnet,**
daß das Trägerteil (1) Halteelemente (6) zur lösbaren Aufnahme der Wickelkassette (3) aufweist und daß die einzelnen Glasfasern (22) des ankommenden Glasfaserkabels (21) über die an der Wickelkassette (3) festgelegten Spleißverbindungen (28) mit den einzelnen, zu den Glasfasersteckern (12) geführten Glasfasern (22) verbunden und das Glasfaserkabel (21) und die einzelnen Glasfasern (22) gemeinsam auf die am Trägerteil (1) lösbar angebrachte Wickelkassette (3) aufgewickelt sind.

2. Anschlußeinheit nach Anspruch 1, dadurch gekennzeichnet, daß als Halteelemente (6) für die Wickelkassette (3) am oberen Ende des Trägerteils (1) eine nach unten offene Haltelasche (7) und im unteren Bereich des Trägerteiles (1) eine in eine Öffnung der Wickelkassette (3) eingreifende Lagesicherungssicke (8) vorgesehen sind.

3. Anschlußeinheit nach Anspruch 1 oder 2 mit eine Wickelnut einschließenden Seitenflanschen, dadurch gekennzeichnet, daß die Seitenflansche (16) des Wickelkörpers (3) aus abwechselnd gegenüberliegenden Flanschstegen (17) gebildet sind.

4. Anschlußeinheit nach Anspruch 3, dadurch gekennzeichnet, daß die Flanschstege (17) mit abwechselnd gegenüberliegenden, die Wickelnut (15) nach oben abschließenden Verschlußrippen (18) versehen sind.
